# EUROPÄISCHE PATENTSCHRIFT

(11) **EP 1 286 144 B1**
(45) Veröffentlichungstag und Bekanntmachung des Hinweises auf die Patenterteilung: **06.04.2011**
(21) Anmeldenummer: 02026265.5
(22) Anmeldetag: 20.07.2000
(51) Int. Cl.: G01K 7/18

(54) **Verfahren zur Herstellung einer Hybriden Hochtemperaturerfassungseinrichtung**
Method for making a hybrid high temperature measuring device
Méthode pour fabriquer un dispositif hybride pour mesurer des températures hautes

(30) Priorität: 05.08.1999 DE 19936924
(43) Veröffentlichungstag der Anmeldung: 26.02.2003
(62) Teilanmeldung aus: 00956230.7
(73) Patentinhaber: BorgWarner BERU Systems GmbH, 71636 Ludwigsburg (DE)
(72) Erfinder: BorgWarner BERU Systems GmbH, 71636 Ludwigsburg (DE)
(74) Vertreter: Twelmeier, Ulrich

(56) Entgegenhaltungen:
- EP-A- 0 017 359
- DE-A- 19 750 123
- US-A- 4 485 670

## Beschreibung

Die vorliegende Erfindung bezieht sich auf ein Verfahren zur Herstellung einer Vorrichtung zur Hochtemperaturerfassung.

Im Stand der Technik sind Platin-Meßwiderstände in Dünnschichttechnik für Anwendungen in Temperaturbereichen bis 600°C weit verbreitet. Je nach Temperaturbereich und Einsatzgebiet wurden unterschiedliche Ausführungsformen entwickelt. Besonderes Interesse besteht seit einigen Jahren an Ausführungsformen, die für den Einsatz bei höheren Temperaturen (z. B. bis 800°C oder sogar bis über 1.000°C) geeignet sind. Solche Platin-Meßwiderstände sind z. B. in den nachveröffentlichten DE 199 01 183 A und DE 199 01 184 beschrieben.

Bei Massenanwendungen ist aber häufig neben einer zuverlässigen Funktion vor allem auch die kostengünstige Herstellung von zentraler Bedeutung.

Die EP-A-0 017 359 beschreibt einen keramischen Sensor, welcher ein isolierendes Substrat umfaßt, das aus einem keramischen Material hergestellt ist. Ein elektrisches Leiterpaar ist auf dem isolierenden Substrat gebildet und durch eine isolierende Abdeckung bedeckt. An einem Ende des Substrats ist ein Ausgangsanschlußpaar vorgesehen, und am anderen Ende des Substrats ist ein Sensorelement angeordnet, wobei das Sensorelement über die elektrischen Leitungen mit den Ausgangsanschlüßen verbunden ist.

Ausgehend von diesem Stand der Technik liegt der vorliegenden Erfindung die Aufgabe zugrunde, ein einfaches und kostengünstiges Verfahren zur Herstellung einer Vorrichtung zur Hochtemperaturerfassung zu schaffen.

Diese Aufgabe wird durch eine Vorrichtung gemäß Anspruch 1 gelöst.

Bevorzugte Weiterbildungen der vorliegenden Erfindung sind in den Unteransprüchen definiert.

Nachfolgend werden bevorzugte Ausführungsbeispiele der vorliegenden Erfindung anhand der beiliegenden Zeichnungen näher erläutert. Es zeigen:
- Fig. 1: einen Platin-SMD-Chip;
- Fig. 2a bis 2d: die einzelnen Keramiksubstrate, aus denen das Gehäuse hergestellt wird;
- Fig. 3: das aus den Keramiksubstraten zusammengesetzte Gehäuse; und
- Fig. 4: einen Hochtemperatursensor gemäß einem weiteren Ausführungsbeispiel der vorliegenden Erfindung.

In der nachfolgenden Beschreibung der bevorzugten Ausführungsbeispiele der vorliegenden Erfindung werden für gleiche oder ähnliche Elemente in unterschiedlichen Figuren die gleichen Bezugszeichen verwendet.

Die vorliegende Erfindung geht aus von sogenannten SMD-Chips, die kostengünstig herstellbar sind und für Anwendungen im niedrigen Temperaturbereich, z. B. bis 150°C mit lötbaren Kontakten, bekannt sind. Für den Einsatz bei sehr hohen Temperaturen sind jedoch beträchtliche Modifizierungen notwendig, um einen zuverlässigen Schutz der Platinwiderstandsschicht in widrigen Umgebungsbedingungen sicherzustellen (Verhinderung der Diffusion problematischer Fremdstoffe in das Platin) und um eine sichere Kontaktierung der elektrischen Zuleitungen für den Meßstrom zu gewährleisten. Insbesondere ist darauf zu achten, daß nur geeignete Materialien verwendet werden, welche durch den notwendigen Meßstrom bei den angestrebten hohen Einsatztemperaturen nicht elektrochemisch zersetzt werden.

Zunächst ist ein geeigneter SMD-Chip zu erstellen, der sich von herkömmlichen Ausführungen dadurch unterscheidet, daß der auf einem Keramiksubstrat aufgebrachte und bereits strukturierte Platinfilm nicht durch eine Schutzglasur abgedeckt ist und die Kontaktierungsflächen nicht aus Silber oder einer Silberlegierung (z. B. Ag/Pd), sondern aus reinem Platin bestehen.

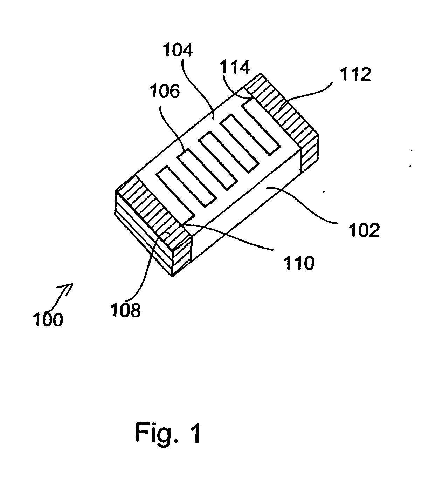

In Fig. 1 ist ein solcher SMD-Chip 100 gezeigt, der ein Keramiksubstrat 102 umfaßt, das beispielsweise aus Al₂O₃ hergestellt ist. Auf einer ersten Hauptoberfläche 104 des Keramiksubstrats 102 ist ein strukturierter Meßfilm 106 aufgebracht, der beispielsweise aus Platin oder einem schwach mit Rhodium legierten Platinfilm besteht. Ein erster Anschluß 108 ist gebildet, der mit einem ersten Ende 110 des Meßfilms 106 verbunden ist. Wie aus Fig. 1 zu erkennen ist, erstreckt sich der erste Anschluß 108 von der ersten Hauptoberfläche 104 des Keramiksubstrats 102 über Seitenflächen desselben auf die zweite Hauptoberfläche des Keramiksubstrats 102. Auf gleiche Art ist ein zweiter Anschluß 112 gebildet, der mit einem zweiten Ende 114 des Meßfilms 106 verbunden ist.

Bei dem in Fig. 1 dargestellten Ausführungsbeispiel sind der Meßfilm 106, der erste Anschluß 108 und der zweite Anschluß 112 aus dem gleichen, hochtemperaturstabilen Material gebildet, wie z. B. Platin. Bei einem weiteren Ausführungsbeispiel können jedoch auch unterschiedliche Materialien verwendet werden, sofern diese die erforderliche Hochtemperaturstabilität aufweisen. Mögliche Materialien sind Platinlegierungen bzw. für einfache Anwendungen (ca. 800°C) Nickel oder Nickellegierungen.

Der in Fig. 1 dargestellte SMD-Chip 100 stellt somit einen Hochtemperaturmeßfühler dar, wobei durch den Film 106 ein Hochtemperaturmeßelement gebildet ist.

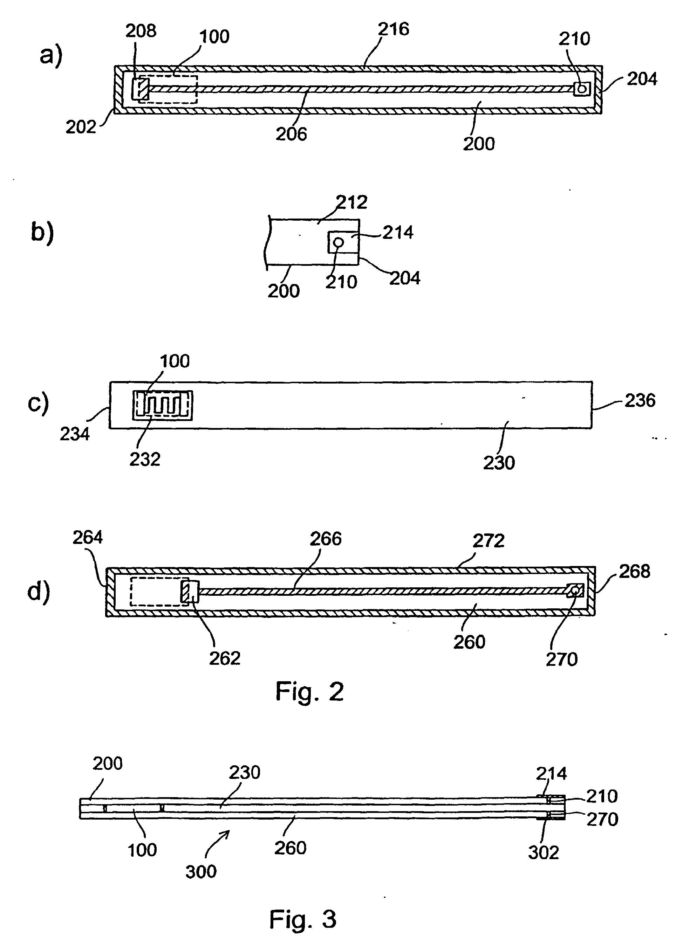

Anhand der Fig. 2 werden nachfolgend die einzelnen Keramiksubstrate näher beschrieben, aus denen das Gehäuse der erfindungsgemäßen Vorrichtung hergestellt wird.

Fig. 2a zeigt ein erstes bzw. unteres Keramiksubstrat bzw. Keramikdeckplättchen 200, wobei hier diejenige Oberfläche dargestellt ist, die beim zusammengesetzten Gehäuse dem Hochtemperaturmeßfühler bzw. SMD-Chip gegenüberliegt. Diese Seite wird der Einfachheithalber als "Innenseite" bezeichnet. In Fig. 2a ist derjenige Bereich gestrichelt dargestellt, in dem das Keramiksubstrat 200 mit dem SMD-Chip 100 überlappend angeordnet ist. Das zweite Ende des Keramiksubstrats 200 ist mit dem Bezugszeichen 204 versehen. Auf der Innenseite des Keramiksubstrats 200 ist eine Leiterbahn 206 aus einem hochtemperaturstabilen Material gebildet, wie z.B. Platin oder Platinlegierung (z.B. PtRh).

Benachbart zu dem ersten Ende 202 des Keramiksubstrats 200 weist die Leiterbahn 206 eine Kontaktanschlußfläche 208 auf, mittels der beim Zusammenbau die Leiterbahn 206 über den Kontakt 208 mit dem ersten Anschluß 108 (siehe Fig. 1) des SMD-Chips 100 kontaktiert wird. Wie zu erkennen ist, erstreckt sich die Leiterbahn 206 ausgehend von der Kontaktstelle 208 in Richtung des zweiten Endes 204 des Keramiksubstrats 200, wobei an dem Ende der Leiterbahn 206, welches benachbart zum zweiten Ende 204 des Keramiksubstrats 200 angeordnet ist, eine Durchkontaktierung 210 vorgesehen ist, mittels der die Leiterbahn 206 von der in Fig. 2a dargestellten "Innenseite" des Keramiksubstrats 200 auf die in Fig. 2b teilweise dargestellte "Außenseite" 212 des Keramiksubstrats 200 geführt wird. Wie in Fig. 2b zu erkennen ist, ist auf der "Außenseite" 212 des Keramiksubstrats 200 eine Anschlußfläche 214 angeordnet.

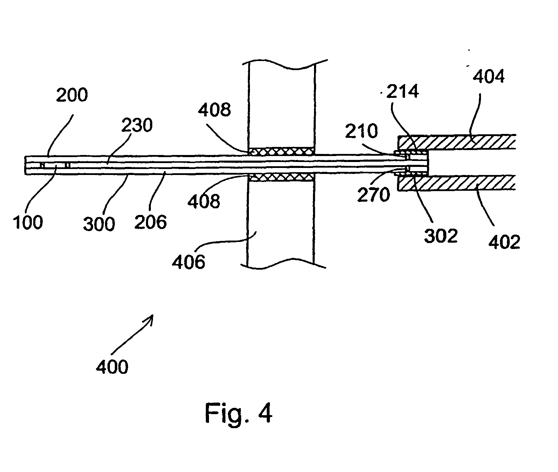

Bei einer anderen Leiterbahnführung kann auf die Durchkontaktierung (Fig. 4) verzichtet werden. Hierbei umfaßt das erste (mittlere) Keramiksubstrat am zweiten Ende auf Vorderund Rückseite eine Metallisierung von ca. 3mm Länge. Die beiden äußeren Keramiksubstrate (zweites und drittes Keramiksubstrat) werden bei dieser Ausführungsform ca. 2mm kürzer gehalten. Im Bereich des zweiten Endes des zweiten und dritten Keramiksubstrats liegt dann jeweils eine Überlappung mit der Metallisierung des ersten Keramiksubstrats vor, und außerhalb der Überlappungszone bilden die Metallisierungen des ersten Keramiksubstrats jeweils eine Anschlußfläche, z.B. für das Anschweißen eines Anschlußdrahtes.

Bei einer Ausführung, bei der beide (Draht-) Kontakte auf einer Seite des fertigen Sensorelements liegen sollen, kann eine Kombination der beschriebenen Leiterbahnführungen verwendet werden (1 x Durchkontaktierung - 1 x Überlappung).

Das Keramiksubstrat 200 ist an seiner Umrandung mit einer Glasur 216 versehen, die beim Zusammenfügen der einzelnen Elemente des Gehäuses für eine hermetische Verschmelzung der einzelnen, teilweise noch zu beschreibenden Keramiksubstrate führt.

In Fig. 2c ist ein zweites Keramiksubstrat 230 gezeigt, das aus dem gleichen Material hergestellt ist, wie das anhand der Fig. 2a und 2b beschriebene erste Substrat 200. Das zweite Keramiksubstrat 230 bzw. das mittlere Keramikplättchen 230 umfaßt keine Leiterbahnstrukturen, sondern es ist lediglich eine Ausnehmung bzw. ein Ausschnitt 232 vorgesehen, in den der anhand der Fig. 1 beschriebene SMD-Chip 100 (gestrichelt dargestellt) eingelegt wird. Die Ausnehmung 232 ist benachbart zu einem ersten Ende 234 des zweiten Keramiksubstrats 230 angeordnet, und das zweite Ende des Keramiksubstrats 230 ist mit dem Bezugszeichen 236 versehen.

Fig. 2d zeigt ein "oberes" Keramikdeckplättchen bzw. ein drittes Keramiksubstrat 260, das bezüglich seines Aufbaus im wesentlichen identisch zu dem anhand der Fig. 2a beschriebenen Keramikplättchen 200 ist, mit Ausnahme der Tatsache, daß sich die Kontaktfläche 262 zur Kontaktierung des zweiten Anschlusses 112 (siehe Fig. 1) des SMD-Chips 100 weiter von dem ersten Ende 264 des dritten Keramiksubstrats 260 befindet, was durch die unterschiedliche Anordnung der entsprechenden Anschlüsse auf dem SMD-Chip 100 hervorgerufen wird. Wie schon der anhand der Fig. 2a beschriebene Kontakt 208 dient auch der Kontakt 262 zur elektrischen Kontaktierung des SMD-Chips 100 über den zweiten Anschluß 112 (siehe Fig. 1). Ausgehend von dem Kontakt 262 erstreckt sich eine Leiterbahn 266 in Richtung des zweiten Endes 268 des dritten Substrats 260, wobei die Leiterbahn 266 aus den gleichen Materialien hergestellt sein kann, wie die anhand der Fig. 2a beschriebene. In Fig. 2d ist, ähnlich wie in Fig. 2a, die "Innenseite" des Keramiksubstrats 260 gezeigt, also diejenige Seite, die dem zweiten Substrat 230 nach dem Zusammenbau gegenüber liegt. Benachbart zu dem zweiten Ende 268 des dritten Substrats 260 ist eine Durchkontaktierung 270 vorgesehen, über die, ähnlich wie bei dem ersten Keramiksubstrat die Leiterbahn 266 auf die "Außenseite" herausgeführt wird und dort mit einem, in Fig. 2d nicht dargestellten, Anschluß verbunden ist.

Wie oben erwähnt, wird der anhand der Fig. 1 beschriebene SMD-Chip 100 in einem speziellen Keramikaufbau, bestehend aus dem ersten bis dritten Keramiksubstrat 200, 230, 260 gehäust, wobei die Chip-Anschlußflächen bzw. -Kontaktflächen 108, 112 mit den vorgesehenen Platinleiterbahnen 206, 266 des jeweiligen unteren bzw. oberen Keramikdeckplättchens 200, 260 kontaktiert werden. Der Aufbau der Keramikgehäuse besteht somit aus insgesamt drei . übereinander gelegten Plättchen 200, 230, 260, die z. B. eine typische Abmessung von 25 mm x 3 mm x 0,3 mm (Länge, Breite, Dicke) aufweisen können. Das untere und das obere Deckplättchen 200, 260 weisen jeweils eine in Längsrichtung geführte Platinleiterbahn 206, 266 auf, die jeweils an einem Ende zu einer äußeren Kontaktfläche 214 durchkontaktiert sind, wie dies in Fig. 2a und 2d gezeigt ist. Das mittlere Plättchen 230 weist den rechteckigen Ausschnitt 262 auf, in welchen der SMD-Chip 100 eingelegt werden kann, wie dies in Fig. 2c gezeigt ist.

In Fig. 3 ist das Gehäuse 300 dargestellt, welches sich durch die Verbindung der drei Keramikplättchen 200, 230 und 260 ergibt. Neben den bereits anhand der Fig. 2 beschriebenen Elementen ist in Fig. 3 ferner der Anschluß 302 auf der Außenseite des dritten Substrats 260 zu erkennen, zu dem die Leiterbahn in dem dritten Substrat 260 über die Durchkontaktierung 270 herausgeführt wird.

In der Prozeßabfolge kann zunächst das untere Keramikdeckplättchen 260 mit dem mittleren Keramikplättchen 230, z. B. mittels der auf das untere Deckplättchen partiell aufgebrachten Glasurpaste 272 (siehe Fig. 2d), dicht verschmolzen werden. Die Platinleiterbahn 266 auf der Innen- bzw. Oberseite des unteren Plättchens 260 ist so geführt, daß sie bis zur "vorderen" Kontaktposition des SMD-Chips 100 in den Ausschnitt 262 des darüber gelegten mittleren Plättchens 230 hineinragt.

Auf dieses Leiterbahnstück innerhalb des Ausschnitts 262 wird nun ein kleiner "Tropfen" Dickschicht-Leiterpaste (z.B. Platin) aufgebracht, und anschließend wird der SMD-Chip 100 so in den Ausschnitt gelegt, daß ein Kontaktanschluß 112 des SMD-Chips 100 mit dieser unteren Leiterbahn 266 elektrisch verbunden ist. Nun wird der gegenüberliegende Kontaktanschluß 108 des SMD-Chips 110 auf der Oberseite mit einem "Tropfen" Platin-Dickschichtpaste versehen und das obere Keramikdeckplättchen 200 (Leiterbahn 206 nach unten weisend) so auf das mittlere Keramikplättchen 230 gelegt, daß der eingelegte SMD-Chip 100 mittels der vorher aufgebrachten Platin-Paste mit der nach unten weisenden Leiterbahn 206 des oberen Keramikdeckplättchens 200 elektrisch verbunden ist. Die Unter- bzw. Innenseite des oberen Keramikdeckplättchens 200 wurde in einem vorangehenden Prozeßschritt bereits partiell mit einer Glasurschicht 216 versehen, so daß das Deckplättchen 200 mit dem mittleren Plättchen 230 samt SMD-Chip 100 bei einem Einbrennprozeß dicht verschmolzen werden kann.

Auf die oben beschriebene Art und Weise ist das SMD-Element innerhalb der drei Keramikplättchen 200, 230, 260 hermetisch dicht eingeschlossen und die elektrische Verbindung über die Leiterbahnen 206, 266 und die Durchkontaktierungen 210, 270 auf die äußeren Kontaktflächen 214, 302 geführt.

Gemäß des vorliegenden Erfindung wird statt des ersten, zweiten und dritten Keramikplättchens eine sogenannte "grüne Keramik" verwendet. Hierbei entfällt das Aufdrucken der zur Verschmelzung der Keramikplättchen notwendigen Glasurpaste, da die drei grünen Keramikfolien (bereits mit SMD-Chip bestückt und Pt-Leiterpaste bedruckt) durch einen entsprechenden Brennvorgang der Gesamtschichtung (T > 1200°C) in sich hermetisch dicht versintern.

Dieser Aufbau bietet - bei entsprechender Gesamtlänge des Gehäuses 300 - die Möglichkeit, daß der äußere Kontaktanschluß 214, 302 bereits auf einer deutlich geringeren Temperatur liegt als die Sensorspitze (SMD-Chip).

Dieser Effekt kann noch weiter unterstützt werden, indem, wie dies nachfolgend anhand der Fig. 4 beschrieben wird, etwa in der Mitte der Vorrichtung eine "Trennwand" wirksam wird. In Fig. 4 ist ein Sensor 400 gemäß einem weiteren Ausführungsbeispiel der vorliegenden Erfindung gezeigt, und dieser Sensor umfaßt das anhand der Fig. 3 beschriebene Gehäuse 300. Wie zu erkennen ist, ist bei dem in Fig. 4 dargestellten Beispiel an das Ende des Gehäuses 300, welches von dem SMD-Chip 100 beabstandet ist, die entsprechende Zuleitung angebracht, und zwar in der Form eines ersten und eines zweiten Zuleitungsdrahts 402 und 404.

An einer Position entlang des Gehäuses 300, die näher an den Anschlußflächen 210 und 302 ist, ist eine Trennwand 406 aus Metall (z.B. Cr-Stahl) oder Keramik (z.B. Al₂O₃ oder Keramik 221) angeordnet. Zwischen dem Gehäuse 300 und der Trennwand 406 ist eine Dichtungsmasse 408 angeordnet, die z.B. aus einer Glasur mit einem geeignete thermischen Ausdehnungskoeffizienten (Fritte 1) oder aus einer Keramikpaste (z.B. Cotronics 989) hergestellt ist.

Der wesentliche Vorteil der erfindungsgemäßen Vorrichtung besteht darin, daß die Kontaktstellen 210, 302 für die elektrischen Zuleitungen 402, 404, die insbesondere bei den vorliegenden extrem hohen Temperaturen einer erheblichen thermischen Belastung ausgesetzt werden, kostengünstig in eine Zone wesentlich niedriger Temperatur gelegt werden können. Die Kosten für die "langen" Keramikplättchen 200, 230, 260 der Gehäuse 300 sind pro Fläche wesentlich günstiger als die Kosten der platinbeschichteten Dünnfilm-Keramik für den Temperatursensor bzw. den Hochtemperaturmeßfühler 100. Die Größe der SMD-Elemente 100, die das sensitive Teil darstellen, kann dagegen relativ klein und dadurch kostengünstig gehalten werden.

Ein weiterer, ebenfalls sehr wesentlicher Vorteil kann mit dem beschriebenen Aufbau erreicht werden, wenn eine kurze Ansprechzeit für den Temperatursensor benötigt wird. Hier läßt sich durch günstig gewählte Abmessungen (dünne Keramikplättchen) einerseits, sowie insbesondere durch den möglichen Verzicht auf ein zusätzliches Schutzrohr für den Temperaturfühler, das in herkömmlichen Aufbauten normalerweise erforderlich ist, eine optimale Ankopplung an das Meßmedium erreichen.

## Patentansprüche

1. Verfahren zur Herstellung einer hybriden Hochtemperaturerfassungseinrichtung mit folgenden Schritten:
a) Bereitstellen eines Hochtemperaturmeßfühlers (100), der einen Hochtemperaturmeßfilm (106), einen ersten Anschluß aus einem hochtemperaturstabilen Material (108) und einen zweiten Anschluß (112) aus einem hochtemperaturstabilen Material, die mit dem Hochtemperaturmeßfilm (106) verbunden sind, umfasst;
b) Anordnen des Hochtemperaturmeßfühlers (100) in einer durchgehenden Ausnehmung (232) einer ersten Keramikgrünschicht (230), die benachbart zu einem ersten Ende (234) der ersten Keramikgrünschicht (230) angeordnet ist;
c) Sintern der ersten Keramikgrünschicht (230) mit einer zweiten Keramikgrünschicht (200) und einer dritten Keramikgrünschicht (260), um ein Gehäuse (300) aus drei übereinandergelegten Keramikgrünschichten (230, 200, 260) zu bilden, wobei eine auf der zweiten Keramikgrünschicht (200) angeordnete erste Leiterbahn (206) an einem ersten Ende (202) derselben mit dem ersten Anschluß (108) des Hochtemperaturmeßfühlers (100) verbunden ist, wobei sich die erste Leiterbahn (206) zu einem zweiten Ende (204) der zweiten Keramikgrünschicht (200) erstreckt, wobei eine auf der dritten Keramikgrünschicht (206) angeordnete zweite Leiterbahn (266) an eine ersten Ende (264) derselben mit dem zweiten Anschluß (112) des Hochtemperaturmeßfühlers (100) verbunden ist, und wobei sich die zweite Leiterbahn (266) zu einem zweiten Ende (268) der dritten Keramikgrünschicht (260) erstreckt; und
d) Aufbringen einer ersten Anschlußfläche (214) und einer zweiten Anschlußfläche (302) auf dem Gehäuse zum Anschließen elektrischer Leitungen (402, 404) über ein nicht-hochtemperaturstabiles Material zum Abgreifen eines durch den Hochtemperaturmeßfühler (100) erzeugten Signals.

2. Verfahren gemäß Anspruch 1 mit folgendem Schritt:
Anordnen einer thermischen Trennwand (406) an dem Gehäuse, das sich durch das Sintern der ersten, zweiten und dritten Keramikgrünschicht ergibt, an einer Position zwischen einem ersten und einem zweiten Ende des Gehäuses.

3. Verfahren nach Anspruch 2, bei dem die thermische Trennwand (406) aus einem Metall oder einem Keramikmaterial hergestellt ist.

4. Verfahren nach einem der Ansprüche 1 bis 3, bei dem der Hochtemperaturmeßfilm (106) ein strukturierter Film aus einem hochtemperaturstabilen Material ist, wobei der erste Anschluß (108), der zweite Anschluß (112) und der strukturierte Film (106) aus dem gleichen hochtemperaturstabilen Material hergestellt sind und auf einem Keramiksubstrat (102) gebildet sind.

5. Verfahren nach Anspruch 4, bei dem die erste und die zweite Leiterbahn (206, 266) aus demselben hochtemperaturstabilen Material hergestellt sind, aus dem der erste Anschluß (108), der zweite Anschluß (112) und der strukturierte Film (106) hergestellt sind.

6. Verfahren nach einem der Ansprüche 1 bis 5, bei dem die erste Leiterbahn (206) auf einer ersten, der ersten Keramikgrünschicht (230) zugewandten Oberfläche der zweiten Keramikgrünschicht (200) angeordnet ist und über eine Durchkontaktierung (210) benachbart zu dem zweiten Ende (204) mit der ersten Anschlußfläche verbunden ist; und
die zweite Leiterbahn (266) auf einer ersten, der ersten Keramikgrünschicht (230) zugewandten Oberfläche der dritten Keramikgrünschicht (260) angeordnet ist und über eine Durchkontaktierung (270) benachbart zu dem zweiten Ende (268) mit der zweiten Anschlußfläche (302) verbunden ist.

7. Verfahren gemäß einem der Ansprüche 1 bis 6, bei der das hochtemperaturstabile Material Platin ist.

## Claims

1. A method for manufacturing a hybrid high-temperature measuring device comprising the following steps:
a) Providing a high-temperature sensor (100) comprising a high-temperature measuring film (106), a first terminal made of a high-temperature resistant material (108) and a second terminal (112) made of a high-temperature resistant material, which are connected to the high-temperature measuring film (106);
b) Placing the high-temperature sensor (100) in a through recess (232) of a first ceramic green sheet (230), which is adjacent to a first end (234) of the first ceramic green sheet (230);
c) Sintering the first ceramic green sheet (230) with a second ceramic green sheet (200) and with a third ceramic green sheet (260) to form a housing (300) of three stacked ceramic green sheets (230, 200, 260), wherein a first conductive track (206) disposed on the second ceramic green sheet (200) is connected at a first end (202) thereof to the first terminal (108) of the high-temperature sensor (100), the first conductive track (206) extending to a second end (204) of the second ceramic green sheet (200), and wherein a second conductive track (266) disposed on the third ceramic green sheet (206) is connected at a first end (264) thereof to the second terminal (112) of the high-temperature sensor (100), the second conductive track (266) extending to a second end (268) of the third ceramic green sheet (260); and
d) Appling a first terminal pad (214) and a second terminal pad (302) on the housing to connect electrical leads (402, 404) via a non-high-temperature resistant material for tapping a signal generated by the high-temperature sensor (100).

2. The method according to claim 1, comprising the following step:
Arranging a thermal partition (406) on the housing, which is obtained by sintering the first, the second, and the third ceramic green sheet, at a position between a first and a second end of the housing.

3. The method according to claim 2, in which the thermal partition (406) is made of a metal or a ceramic material.

4. The method according to any of the claims 1 to 3, wherein the high-temperature measuring film (106) is a structured film made of a high-temperature resistant material, wherein the first terminal (108), the second terminal (112) and the structured film (106) are made of the same high-temperature resistant material and are formed on a ceramic substrate (102).

5. The method according to claim 4, in which the first and the second conductive track (206, 266) are made of the same high-temperature resistant material of which the first terminal (108), the second terminal (112), and the structured film (106) are made.

6. The method according to any of the claims 1 to 5, in which the first conductive track (206) is disposed on a first surface of the second ceramic green sheet (200), which first surface faces the first ceramic green sheet (230), and is connected to the first terminal pad via a plated through-hole (210) adjacent to said second end (204); and
the second conductive track (266) is disposed on a first surface of the third ceramic green sheet (260), which first surface faces the first ceramic green sheet (230), and is connected to the second terminal pad (302) via a plated through-hole (270) adjacent to said second end (268).

7. The method according to any of the claims 1 to 6, in which the high-temperature resistant material is platinum.

## Revendications

1. Procédé pour la fabrication d'un dispositif de détection de hautes températures, avec les étapes suivantes :
a) Apport d'une sonde de mesure de hautes températures (100) comprenant un film de mesure de hautes températures (106), un premier raccord constitué d'un matériau stable aux hautes températures (108), ainsi qu'un deuxième raccord (112) constitué d'un matériau stable aux hautes températures, qui sont reliés au film de mesure de hautes températures (106) ;
b) Disposition de la sonde de mesure de hautes températures (100) dans une cavité traversante (232) d'une première couche de céramique verte (230), disposée à proximité d'une première extrémité (234) de la première couche de céramique verte (230) ;
c) Frittage de la première couche de céramique verte (230) avec une deuxième couche de céramique verte (200) et une troisième couche de céramique verte (260), pour former un boîtier (300) constitué de trois couches de céramique verte superposées (230, 200, 260), dans lequel une première piste conductrice (206) disposée sur la deuxième couche de céramique verte (200) est reliée, par une première de ses extrémités (202), au premier raccord (108) de la sonde de mesure de hautes températures (100), dans lequel la première piste conductrice (206) s'étend jusqu'à une deuxième extrémité (204) de la deuxième couche de céramique verte (200), dans lequel une deuxième piste conductrice (266) disposée sur la troisième couche de céramique verte (260) est reliée, par une première de ses extrémités (264), au deuxième raccord (112) de la sonde de mesure de hautes températures (100), et dans lequel la deuxième piste conductrice (266) s'étend jusqu'à une deuxième extrémité (268) de la troisième couche de céramique verte (260) ; et
d) Application d'une première surface de raccordement (214) et d'une deuxième surface de raccordement (302) sur le boîtier, pour le raccordement de lignes électriques (402, 404) par un matériau non stable aux hautes températures, en vue de la détection d'un signal produit par la sonde de mesure de hautes températures (100).

2. Procédé selon la revendication 1, avec les étapes suivantes :
- Disposition d'une cloison de séparation thermique (406) sur le boîtier, qui est formé par frittage des première, deuxième et troisième couches de céramique verte, à un endroit situé entre une première et une deuxième extrémité du boîtier.

3. Procédé selon la revendication 2, dans lequel la cloison de séparation thermique (406) est fabriquée en métal ou en un matériau à base de céramique.

4. Procédé selon l'une des revendications 1 à 3, dans lequel le film de mesure de hautes températures (106) est un film structuré à partir d'un matériau stable aux hautes températures, dans lequel le premier raccord (108), le deuxième raccord (112) et le film structuré (106) sont fabriqués à partir du même matériau stable aux hautes températures, et sont formés sur un substrat de céramique (102).

5. Procédé selon la revendication 4, dans lequel la première et la deuxième piste conductrice (206, 266) sont fabriquées à partir du même matériau stable aux hautes températures que le premier raccord (108), le deuxième raccord (112) et le film structuré (106).

6. Procédé selon l'une des revendications 1 à 5, dans lequel la première piste conductrice (206) est disposée sur une première surface de la deuxième couche de céramique verte (206) tournée vers la première couche de céramique verte (230), et est reliée à la première surface de raccordement par un trou métallisé (210) à proximité de la deuxième extrémité (204) ; et
- la deuxième piste conductrice (266) est disposée sur une première surface de la troisième couche de céramique verte (260) tournée vers la première couche de céramique verte (230), et est reliée à la deuxième surface de raccordement (302) par un trou métallisé (270) à proximité de la deuxième extrémité (268).

7. Procédé selon l'une des revendications 1 à 6, dans lequel le matériau stable aux hautes températures est du platine.
